# EUROPEAN PATENT APPLICATION

(11) **EP 4 420 512 A1**
(43) Date of publication of application: **28.08.2024**
(21) Application number: 23158604.1
(22) Date of filing: 24.02.2023
(51) Int. Cl.: A01G 9/02, A01G 31/02

(54) **PLANT SUPPORT PANEL**

(71) Applicant: Innovation Agritech Group Limited, Bracknell, Berkshire RG42 6BN (GB)
(72) Inventor: ROBERTS, Neil David, Hampshire, GU14 0PX (GB)
(74) Representative: Boynton, Juliette Alice

(57) **Abstract**

A plant support panel for an aeroponic plant cultivation system comprises:
(a) a pane, having:
(i) a front face,
(ii) a back face,
(iii) a top in use, and
(iv) a bottom in use, and

(b) a plurality of openings in the pane each for supporting at least one seed plug,
wherein:
each opening is for supporting a plurality of plants,
each opening is in the form of a slot arranged such that its long dimension is along a width of the pane, and
each opening has a bottom lip at a bottom of the slot.

## Description

### Introduction

The present invention relates to plant support panels for aeroponic plant cultivation systems and to associated plant cultivation structures and methods. In particular, the invention relates to an improved plant support panel for an aeroponic plant cultivation system.

### Background

Conventional farming methods, such as growing plants in fields, are known and have proven sufficient for supplying humanity with food for several centuries. However, more recently, alternative farming methods have been needed to continue to provide sufficient food for an ever-increasing global human population. Aeroponic, hydroponic, and aquaponic plant cultivation methods are known examples of such alternative farming methods.

Conventional farming methods typically require soil, or an equivalent solid medium, to provide the plants being grown with nutrients. However, aeroponic plant cultivation methods typically involve growing plants without soil or an equivalent solid medium. Instead, in aeroponic systems, plants are typically provided with nutrients via a spray or mist containing such nutrients.

Hydroponic plant cultivation methods also involve growing plants without soil or an equivalent solid medium. However, unlike aeroponic methods, hydroponic plant cultivation methods typically involve providing plants with nutrients by growing these in water in which the nutrients are dissolved.

Aquaponic plant cultivation methods are similar to hydroponic plant cultivation methods, but typically additionally involve raising aquatic animals in the water to enrich the nutrients dissolved therein.

A key difference between aeroponic plant cultivation methods and hydroponic/aquaponic plant cultivation methods is that air may circulate around the roots in aeroponic plant cultivation methods, but not in hydroponic/aquaponic plant cultivation methods. This is because the spray/mist used in aeroponic plant cultivation methods is typically only sprayed/misted onto the roots at intervals, i.e. there are typically periods of time during which no spray/mist is projected onto the roots.

The present invention is primarily intended for use in aeroponic plant cultivation systems. However, it is anticipated that the present invention could be adapted for use in hydroponic and/or aquaponic plant cultivation systems, as well.

Aeroponic plant cultivation systems are known in the art and are described in, for example, US 9,241,453. Aeroponic plant cultivation systems are known to be advantageous in certain situations because these may eliminate the need for a field or other open space, which is typically a requirement of conventional farming methods, to grow plants. This means plants can be grown in higher densities in aeroponic plant cultivation systems than in conventional farming methods. This also means plants can be grown in remote environments, using aeroponic systems, where soil is not readily available, such as deserts; this is believed to be advantageous because it allows aeroponic plant cultivation systems to be used to provide a reliable source of food crops in remote communities where plant growth is not otherwise readily achievable.

The lack of a requirement for plants to be grown in a field in aeroponic plant cultivation systems also means plants can be grown inside, such as in a building. By growing plants inside, rather than outside, such as in a field, operators of aeroponic plant cultivation systems are more readily able to control environmental factors than operators of conventional farms where plants are grown in a field. This renders aeroponic plant cultivation systems advantageous over conventional farming systems, in certain situations, because it increases the likelihood of uniform, optimal, and/or efficient plant growth across the farm. Examples of environmental factors operators of aeroponic plant cultivation systems may be able to control, which would be difficult to control in conventional farms where plants are grown outside, include accessibility of pests to the plants, carbon dioxide concentration, humidity, light intensity, nutrient availability, pH, and temperature. It will be appreciated that other environmental factors may be controlled by operators of aeroponic plant cultivation systems, as well.

It will also be appreciated that many of the above-mentioned advantages over conventional farming methods apply equally to hydroponic and/or aquaponic plant cultivation systems, as well as aeroponic plant cultivation systems.

Aeroponic plant cultivation systems typically comprise a plant support frame for holding one or more plant support panel(s) upon which one or more individual plant(s) are grown. Plant support panels, and plant support frames for use with such plant support panels, for use in aeroponic plant cultivation systems are known in the art and are described in, for example, US 9,374,953, US 9,788,495, and US 11,464,180. It will be appreciated that these three documents describe plant support panels intended to be arranged vertically when in use, growing plants, but that plant support panels may alternatively be arranged horizontally, at an angle, or in any other orientation. Aeroponic plant cultivation systems wherein the plant support panels are arranged vertically are typically known in the art as "vertical farms" and the associated methods of plant cultivation are typically known as methods of "vertical farming".

It is known that a plant support panel typically comprises a plurality of openings, each typically designed to support, e.g. hold/contain, one seed plug, which is itself designed to hold/contain one seed. Usually, once a seed plug containing a seed is positioned in an opening of the plant support panel, a plant will grow out of the opening and will then spread over the pane/surface of the plant support panel.

A problem newly identified by the present inventors is that the openings of known plant support panels are arranged at a fixed distance apart from each other. This separation distance may be appropriate and indeed suitable for growing plants of a certain variety on the plant support panel optimally/efficiently/uniformly. However, for smaller plant varieties, the separation distance between adjacent openings may be too great to allow plants of those varieties to be grown optimally/efficiently/uniformly on the plant support panel at high density. This is because space may be wasted between adjacent openings that could otherwise be used for growing additional plants. Similarly, for larger plant varieties, the separation distance between adjacent openings may be too short to allow plants of those varieties to be grown optimally/efficiently/uniformly on the plant support panel at high density. This is because large plants growing out of adjacent openings may compete with each other due to the separation distance being too short, thereby preventing the plants from growing optimally/efficiently/uniformly. Hence, known plant support panels for aeroponic plant cultivation systems may be suitable for growing plant varieties of a certain size, but may not be suitable for growing plant varieties that are smaller or larger than that certain size; this may limit the number of plant varieties that can be grown at high density on the plant support panel, which limits the use(s) of the plant support panel.

Accordingly, it is desirable to provide a plant support panel for an aeroponic plant cultivation system that is suitable for optimally/efficiently/uniformly growing plant varieties of different sizes at high density.

Another problem with known plant support panels newly identified by the present inventors is that plant support panels may have a tendency to bow outwards and/or downwards when a large number of plants are grown thereon. Bowing is typically thought to be a result of the relatively high total weight of the plants on the plant support panel exceeding that which the plant support panel is able to cope with, which results in the shape of the plant support panel distorting into a bowed configuration. A bowed configuration typically involves a middle portion of the plant support panel bending relative to upper and lower portions of the plant support panel. Bowing has a number of disadvantages. For example, bowing may result in some plants growing on the plant support panel being positioned closer to a light source or a spray nozzle than others, which results in the conditions experienced by some plants differing to the conditions experienced by others; these different conditions may result in different rates of growth between plants growing on the same plant support panel, which prevents the plants from growing uniformly and thus optimally/efficiently. Bowing may also decrease the strength of the plant support panel. Furthermore, if the extent of bowing is sufficiently great, then adjacent plant support panels connected to the same plant support frame may come into contact with each other, which may impede plant growth on both plant support panels, e.g. by causing plants growing on adjacent plant support panels to compete with each other. Bowing may also cause a spray nozzle assembly inside the plant support panel to become distorted, which may in turn result in nutrient-containing spray/mist being projected at the wrong angle and/or onto the roots of the plants growing on the plant support panel in a non-uniform manner. These problems may prevent the plants from growing optimally/efficiently/uniformly on the plant support panel.

Accordingly, it is desirable to provide a plant support panel for an aeroponic plant cultivation system that is resistant to bowing.

It also is desirable in general to provide a plant support panel suitable for growing plants uniformly since a high degree of uniformity between the plants means all plants growing on the plant support panel are likely to be fully grown and thus ready to be harvested at the same time, rather than some plants being ready for harvesting before others, which may otherwise render the system inefficient.

It also is desirable in general to provide alternative, and preferably improved, aeroponic plant cultivation systems, as well as alternative, and preferably improved, components therefor, such as plant support panels therefor.

### Summary of the Invention

The invention provides a plant support panel for an aeroponic plant cultivation system suitable for optimally/efficiently/uniformly growing a plurality of different plant varieties of different sizes at high density.

An advantage of the plant support panel of the present invention is that a single plant support panel may be used to optimally/efficiently/uniformly grow a plurality of plant varieties of different sizes, each at high density. This is advantageous because it prevents operators of aeroponic plant cultivation systems from needing to acquire more than one type of plant support panel, e.g. one type of plant support panel per plant variety the operator intends to grow, and from needing to determine which type of plant support panel should be used for each type of plant they intend to grow.

A second advantage of the plant support panel of the present invention is that the plant support panel is more resistant to bowing than prior art plant support panels. It is surprising that the plant support panel of the present invention is resistant to bowing, but this nonetheless renders the plant support panel of the invention advantageous over prior art plant support panels due to the above-mentioned problems associated with bowing. The resistance of the plant support panel of the invention to bowing is believed to be caused by the lips/overhangs of the openings of this plant support panel, as explained in more detail below.

### Detailed Description of the Invention

According to a first aspect of the invention, there is provided a plant support panel for an aeroponic plant cultivation system, comprising:
(a) a pane, having:
   (i) a front face,
   (ii) a back face,
   (iii) a top in use, and
   (iv) a bottom in use, and
(b) a plurality of openings in the pane each for supporting at least one seed plug,
wherein:
each opening is for supporting a plurality of plants,
each opening is in the form of a slot arranged such that its long dimension is along a width of the pane, and
each opening has a bottom lip at a bottom of the slot.

The openings may comprise straight edges or rounded edges. It will be appreciated that the openings may comprise a mixture of straight edges and rounded edges, e.g. straight horizontal edges and rounded vertical edges. The openings may comprise straight edges with rounded corners. Alternatively, the openings may comprise straight edges with square, or substantially square, corners.

The openings of the plant support panel may be adapted to support different numbers of seed plugs depending on the plant variety being grown on the plant support panel.

For example, if the plant support panel is used to grow a large plant variety, then a small number of seed plugs, each containing/holding one seed, may be positioned in each opening, wherein these seed plugs may be positioned at a relatively long distance apart from each other. This may ensure that, when plants grow out of the opening and over the pane/surface of the plant support panel, each plant has sufficient space around it to grow optimally/efficiently without competing with the plant(s) adjacent to it. This lack of competition may increase the uniformity of plants growing on the plant support panel. However, the seed plugs may at the same time be positioned at a distance apart from each other such that there is minimal space between adjacent plants once these are fully grown. This may ensure that plants are grown on the plant support panel at high density, which may minimise the amount of space wasted on the plant support panel that may otherwise be used for growing plants, and may thus increase the overall efficiency of the aeroponic plant cultivation system in which the plant support panel is used.

Alternatively, if the plant support panel is used to grow a small plant variety, then a large number of seed plugs, each containing/holding one seed, may be positioned in each opening, wherein these seed plugs may be positioned at a relatively short distance apart from each other. This may ensure that, when plants grow out of the opening and over the pane/surface of the plant support panel, there is minimal space between adjacent plants once these are fully grown. This may result in plants grown on the plant support panel being grown at high density, minimising the amount of space wasted on the plant support panel that may otherwise be used for growing plants, and thus increasing the overall efficiency of the aeroponic plant cultivation system in which the plant support panel is used. However, the seed plugs may nonetheless be positioned at a distance apart from each other such that there is sufficient space for each plant to grow optimally/efficiently without competing with the plant(s) adjacent to it, which may increase the uniformity of plants growing on the plant support panel.

It will be appreciated that it is by providing the openings in the form of slots that may allow seed plugs to be arranged in different densities on the plant support panel, as required, and that this may allow the same plant support panel to be used to optimally/efficiently/uniformly grow different plant varieties of various sizes at high density.

It will also be appreciated that as few as one or two seed plugs may be transplanted into each opening of the plant support panel, wherein each seed plug may contain/hold a plurality of seeds. In such embodiments, the seeds contained/held by the seed plug may be positioned such that these are spaced apart from each other at an optimal distance for the particular plant variety being grown on the plant support panel.

Seed plugs for use with the plant support panel of the invention may be of any material, provided that the seed plug permits nutrient medium to be transferred from its exterior surface to a seed contained/held thereby. Thus, preferably the seed plug is made of or comprises a porous material. Preferably, the seed plug is made of or comprises a cohesive material; this may be advantageous because it may ensure the seed plug is solid and does not disintegrate when a seed is positioned in an opening of the seed plug during seeding and/or when the seed plug is transplanted into an opening of the plant support panel. More preferably, the seed plug is made of or comprises a material that is solid, cohesive, and porous. Even more preferably, the seed plug is made of or comprises coir.

It will be appreciated that references to a "bottom lip" are intended to mean a lip positioned at the bottom of an opening. The bottom lip of each opening is intended to provide support to the one or more seed plug(s) supported by the opening. However, a surprising technical effect of providing each opening with a bottom lip is that the bottom lip may increase the structural strength and integrity of the plant support panel, which may in turn increase the resistance of the plant support panel to bowing when plants are grown thereon.

As mentioned above, it is desirable in general to provide alternative, and preferably improved, plant support panels for aeroponic plant cultivation systems. An advantage of the plant support panel of the invention is that providing the openings in the form of slots means the number of plants that can be supported by a plant support panel of a certain size may be greater than that which can be achieved using prior art plant support panels, which typically only allow one plant to be supported by each opening.

Whilst it will be appreciated that the exact number of plants grown on a particular plant support panel will depend on the dimensions, i.e. size, of that plant support panel, as well as on the size of the plants grown thereon and/or the number of openings of the plant support panel into which seed plugs are transplanted, a prior art plant support panel such as that disclosed in US 11,464,180 may typically support up to 325 plants, with 165 plants typically being grown on a pane on one side of the plant support panel and another 160 plants typically being grown on a second pane on a second side of the plant support panel. The difference between the number of plants grown on the panes on each side of this prior art plant support panel may be due to there typically being a lip at the bottom of one side of the plant support panel, but not the other side thereof.

In contrast, the pane of the plant support panel of the invention may typically support up to 1500 plants in total, preferably between 350 and 1400 plants in total. It will be appreciated that the plant support panel of the invention may comprise more than one pane, e.g. two panes. If two panes are included, then the plant support panel may typically support up to 3000 plants in total, preferably between 700 and 2800 plants in total. This is despite the plant support panel of the invention and the prior art plant support panel disclosed in US 11,464,180 being of similar overall sizes. Thus, it will be appreciated that modifying the prior art plant support panel disclosed in US 11,464,180 to comprise the arrangement of openings of the present invention, but without changing the dimensions, i.e. size, of that prior art plant support panel may allow a greater number of plants to be grown on the plant support panel and/or the density of plants growing on the plant support panel to be optimised for the particular plant variety being grown thereon. Furthermore, the fact that the plant support panel of the invention may support more plants than prior art plant support panels of similar overall size means the plant support panel of the invention may be used to grow plants at a higher density than such prior art plant support panels, which renders the plant support panel of the invention an improvement over prior art plant support panels.

As used herein, the term "plant support panel" is intended to mean an artificial structure that is suitable for growing plants on at least one pane/surface thereof.

As used herein, the term "opening" is intended to mean an opening or structure forming part of a plant support panel that is suitable for supporting one or more seed plug(s).

As used herein, the term "slot" is intended to mean an aperture having a long dimension and a short dimension.

As used herein, the term "seed plug" is intended to mean a structure that is suitable for containing/holding one or more seed(s) and that is itself suitable for being supported by an opening of a plant support panel.

As used herein, the term "plant support frame" is intended to mean a structure that is suitable for supporting one or more plant support panel(s).

As used herein, the term "front face" is used to describe a face of the pane of the plant support panel on and over which leaves of a plant are intended to grow. It will be appreciated that the front face is also the part of the pane onto which light is most likely to be directed during use of the plant support panel, i.e. when plants are growing on the plant support panel.

As used herein, the term "back face" is used to describe a face of the pane of the plant support panel on and over which roots of a plant are intended to grow. It will be appreciated that the back face is also the part of the pane onto which nutrient medium in the form of a spray/mist is most likely to be directed during use of the plant support panel, i.e. when plants are growing on the plant support panel.

As used herein, the term "seeding" is intended to mean the process of positioning a seed within a seed plug.

As used herein, the term "transplanting" is intended to mean the process of positioning a seed plug such that it is supported by an opening of a plant support panel.

As used herein, references to the "size" of a plant variety are intended to mean the average size of individual plants of that plant variety once these plants are fully grown.

As used herein, the terms "variety" and "type of plant" are used interchangeably to refer to plants grouped together within a single botanical taxon of the lowest known rank, defined by the reproducible expression of its distinguishing and other genetic characteristics.

As used herein, the term "plant" is intended to mean an individual plant of a particular plant variety.

As used herein, a description of a plant support panel as having "uniform" plant growth is intended to mean that the plants growing thereon have each grown to the same or a similar size, and that those plants therefore exhibit similar rates of growth.

The plant support panel of the invention may be of any material, and may be made in whole or in part by rotomoulding. Preferably, the plant support panel is made by rotomoulding. Preferably, the plant support panel is of a material selected from the group consisting of cross-linked polyethylene (XLPE), ethylene vinyl acetate (EVA), high density polyethylene (HDPE), linear low density polyethylene (LLDPE), low density polyethylene (LDPE), medium density polyethylene (MDPE), nylon, polycarbonate, polypropylene, and a vinyl compound, such as polyvinyl chloride (PVC). More preferably, the plant support panel is of high density polyethylene (HDPE) or linear low density polyethylene (LLDPE). HDPE and LLDPE are particularly suitable for the plant support panel of the invention because these materials are typically strong and durable.

The plant support panel of the invention may further comprise a spray nozzle assembly. The spray nozzle assembly may supply nutrients to plants growing on the plant support panel, preferably to the roots of such plants, via a spray/mist projected from spray nozzles of the spray nozzle assembly. The spray nozzles may produce this spray/mist by converting a nutrient medium, which may be a liquid, supplied thereto to a spray/mist. Preferably, the spray nozzle assembly is positioned such that the spray nozzles thereof face the back face of the pane of the plant support panel, in a space within the plant support panel.

In embodiments wherein the plant support panel comprises more than one pane, the panes may be arranged such that the back face of one pane faces the back face of the other pane, with the respective front faces of each pane facing outwards from the plant support panel. Thus, the back faces of each pane may be on an inside of the plant support panel, separated by a space where, for example, a spray nozzle assembly may be positioned, and the front faces of each pane may be on an outside of the plant support panel.

The openings need not be of the same size as each other. However, the openings are preferably the same height as each other, even if not the same width as each other.

The openings may be arranged in an array. Preferably, the array is a plurality of rows. More preferably, each row of openings is offset relative to the row(s) of openings adjacent to it. There may be any number of openings in each row. Preferably, there are between one and ten openings in each row. More preferably, there are between one and five openings in each row. The rows of openings may alternate such that there are three openings in one row, then four openings in the adjacent row, and so on. Alternatively, the rows of openings may alternate such that there are two openings in one row, then one opening in the adjacent row, and so on. These configurations of openings may increase the strength of the plant support panel and may maximise the number of plants the plant support panel may support.

In this context, "offset" is intended to mean that left and right edges of each opening, with the exception of the openings closest to the left and right edges of the plant support panel, are not vertically in line with the left and right edges of any openings in the row(s) immediately adjacent to the row that opening forms a part of; instead, the openings are staggered with respect to the openings in the adjacent row(s). This offsetting of openings may increase the strength and rigidity of the plant support panel, which reduces the susceptibility of the plant support panel to bowing when plants are grown thereon. Additionally, this offsetting may facilitate the growing of plants at high density on the plant support panel because, if the rows of openings were instead in line with each other, there may be gaps between each column of openings where plant growth may not occur; this problem may be avoided by offsetting the rows of openings because a plant above or below a gap between two openings/plants in a row adjacent to it may be able to grow over that gap, thereby utilising the otherwise wasted space. It will be appreciated that offsetting the rows of openings therefore increases the efficiency of plant growth on the plant support panel by increasing the density at which plants may be grown thereon and by minimising the amount of space wasted on the plant support panel.

There may be any number of rows of openings. Preferably, there are between five and thirty rows of openings. More preferably, there are between five and fifteen rows of openings. Even more preferably, there are between seven and ten rows of openings. In an Example below, there are fourteen rows of openings and, in another Example below, there are twenty-five rows of openings.

The bottom lip of each opening may protrude from the front face and may be angled towards the top of the pane. Alternatively or additionally, the bottom lip of each opening may protrude from the back face and may be angled towards the bottom of the pane. Angling the bottom lip in one or both of these manners may be advantageous because it results in the opening providing greater support for a seed plug supported by the opening than embodiments wherein different angling is used.

Each opening may have a top lip positioned on an opposite side of the opening to the bottom lip. For example, each opening may have a top lip at a top of the slot. The top lip may increase the support the opening provides for a seed plug supported by the opening. The top lip may also increase the strength/rigidity of the plant support panel, which may increase the resistance of the plant support panel to bowing when plants are grown thereon. The fact that including a top lip may reduce the susceptibility of the plant support panel to bowing is a surprising technical effect identified for the first time by the present inventors.

The top lip of each opening may protrude from the front face. Alternatively or additionally, the top lip of each opening may protrude from the back face. In embodiments wherein both the bottom lip and the top lip of each opening protrude from the front face, the bottom lip preferably protrudes from the front face further than the top lip does. This may result in the opening providing greater support for a seed plug supported thereby.

In embodiments wherein both the bottom lip and the top lip of each opening protrude from the back face, the opening may be described as a "recessed opening". Recessing the opening in this manner may increase the support the opening provides for a seed plug supported by the opening because a greater proportion of the seed plug may be in contact with the opening and thus supported thereby. Recessing the opening in this manner may also increase the strength and rigidity of the plant support panel, which may render the plant support panel less susceptible to bowing when plants are grown thereon.

A slit may be defined at a front of each opening and/or a slit may be defined at a back of each opening. The slit may be defined by the bottom lip of each opening being angled/folded towards the top of the slot. Alternatively or additionally, the slit may be defined by the top lip of each opening being angled/folded towards the bottom of the slot. Preferably, the slit is defined by the bottom lip and the top lip of each opening being angled/folded towards each other.

In embodiments wherein a slit is defined at the back of each opening, the slit may be suitable for a root of a plant growing out of a seed plug supported by the opening to grow through. Including a slit in this manner may ensure the root of the plant grows into a correct/desired space within the plant support panel, adjacent the back face of the pane of the plant support panel, where spray nozzles of a spray nozzle assembly may be positioned to readily and accurately direct spray/mist onto the root when required. Thus, it is preferable to include a slit at the back of each opening since not doing so may result in the roots of different plants growing into the space within the plant support panel at different angles, which may result in some roots receiving a greater amount of nutrient-containing spray/mist from the spray nozzles than others; this would be disadvantageous because this may result in different plants on the same plant support panel growing at different rates to each other due to differences in the levels of nutrients supplied thereto, which may reduce uniformity of plant growth on the plant support panel.

When a seed plug is first transplanted into an opening of the plant support panel of the invention, the seed is unlikely to have germinated, or may have germinated only recently. Thus, one of the first stages of plant growth on the plant support panel may be germination of the seed. This may shortly be followed by further growth of roots and shoots from the seed, until a plant has fully grown therefrom. During germination and early root growth, roots of a plant growing on the plant support panel may not be sufficiently long to project through a recessed opening, e.g. through a slit defined at the back of the recessed opening, to a space within the plant support panel where spray nozzles are provided to supply the roots with nutrients via a spray/mist. Therefore, during germination and early root growth, plants growing on a plant support panel of the invention wherein the opening is recessed may be at risk of dying due to insufficient nutrients being supplied thereto. It will be appreciated that plants dying before these are ready to be harvested may render the system inefficient, which is undesirable. Accordingly, one or more hole(s) may be cut into the top lip. The one or more hole(s) may allow spray/mist from the spray nozzles that collects on an upper surface of the top lip of the recessed opening during spraying/misting to pass through the top lip, via the hole(s), and thus reach the seed plug, thereby supplying the plant with nutrients. This is advantageous because this may ensure that the plant receives required nutrients even when the roots thereof are not sufficiently long to project through the recessed opening to receive nutrients from spray nozzles of the plant support panel.

In embodiments wherein a slit is defined at the front of each opening, the slit may be suitable for supporting a seed plug, and may be particularly suitable for supporting a seed plug that is trapezoidal, frusto-cuboidal, or frustoconical in shape. The slit may be particularly suitable for supporting a seed plug having such a shape because a narrower surface of the seed plug may be passed through the slit, with a wider surface of the seed plug being too wide to pass through the slit, resulting in a part of the seed plug being positioned behind the pane, i.e. protruding from the back face of the pane, exposed to a spray nozzle assembly of the plant support panel, with the rest of the seed plug lodged in and in front of the slit, holding the seed plug in position in and around the opening. Such embodiments may be provided as alternatives to embodiments wherein there is a recessed opening. In such embodiments, there may be no issue with roots being too short to be adequately supplied with nutrients by a spray nozzle assembly of the plant support panel, since the seed plug may be supported by the opening without the bottom lip and the top lip blocking spray/mist from the spray nozzle assembly of the plant support panel from reaching the seed plug.

In embodiments wherein one or both of the bottom lip and the top lip of each opening protrude from the front face but not from the back face, there may be increased space for plants, particularly the roots of such plants, inside the plant support panel, compared to embodiments wherein the lips both protrude from the back face, due to one or both of the lips not being present inside that space.

The bottom lip may initially protrude from the front face or the back face and then be folded such that a portion of the bottom lip distal to the fold traverses the pane, e.g. via the opening, and protrudes from the other face, as long as the portion of the bottom lip distal to the fold is sufficiently long, leaving a portion of the bottom lip proximal to the fold protruding from the face the bottom lip initially protrudes from. Alternatively, if the portion of the bottom lip distal to the fold is sufficiently short, then the entire bottom lip, comprising both the portion thereof distal to the fold and the portion thereof proximal to the fold, may protrude from the front face or the back face and not traverse the pane to protrude from the other face, despite being folded.

The top lip may initially protrude from the front face or the back face and then be folded such that a portion of the top lip distal to the fold traverses the pane, e.g. via the opening, and protrudes from the other face, as long as the portion of the top lip distal to the fold is sufficiently long, leaving a portion of the top lip proximal to the fold protruding from the face the top lip initially protrudes from. Alternatively, if the portion of the top lip distal to the fold is sufficiently short, then the entire top lip, comprising both the portion thereof distal to the fold and the portion thereof proximal to the fold, may protrude from the front face or the back face and not traverse the pane to protrude from the other face, despite being folded.

The above-mentioned folded configurations of one or both of the bottom lip and the top lip may facilitate easy manufacturing of the plant support panel, and may provide additional strength, rigidity, and stability to the plant support panel. Furthermore, these folded configurations may make it easier for plants growing on the plant support panel to be harvested by limiting the extent to which each lip, taken as a whole, protrudes from the pane, e.g. by facilitating the movement of a blade or another sharp implement across the opening. These folded configurations of the lips may also provide additional space for a plant growing out of the opening to occupy within the opening, which may increase the likelihood of plants growing optimally/efficiently/uniformly on the plant support panel.

Embodiments of the plant support panel wherein the top lip, taken as a whole regardless of whether or not the top lip is folded, protrudes from the back face but not the front face may be particularly suitable for growing plants that would typically grow substantially vertically from the opening of a known plant support panel for an aeroponic plant cultivation system, rather than substantially horizontally therefrom, and for plants that would naturally grow substantially vertically, i.e. upwards, in a conventional farm. This may be because having a top lip protruding from only the back face, i.e. not also the front face, allows the plant to initially grow vertically, rather than having to expend energy to first grow horizontally out of the opening and then vertically over the pane/surface of the plant support panel. This may increase the chances of plants being grown on the plant support panel optimally/efficiently/uniformly. It will be appreciated that other embodiments of the plant support panel may be preferred for plants that would typically grow substantially horizontally from the opening of a known plant support panel for an aeroponic plant cultivation system, rather than substantially vertically therefrom, and for plants that would naturally grow substantially horizontally, i.e. in a trailing manner, in a conventional farm, such as berries.

The plant support panel may be suitable for growing any plant variety. However, the plant support panel of the invention is preferably suitable for growing plant varieties selected from the group consisting of flowers, fruits (such as tomatoes and berries), grasses (such as lemon grass), herbs (such as chives), leafy vegetables (such as asparagus, cabbages, cresses, lettuces, and spinach), legumes (such as beans), medicinal plants, root vegetables (such as radishes), and succulents (such as cacti).

Each opening may be covered by a film comprising a plurality of cross-shaped slits. Each cross-shaped slit may allow one seed plug to be positioned therein, holding the seed plug in a desired position within the opening. This may allow the density of plants growing on the plant support panel to be controlled because not all of the cross-shaped slits may need to have a seed plug transplanted thereinto; the number of cross-shaped slits seed plugs are transplanted into, and the number of cross-shaped slits left empty between adjacent cross-shaped slits that have each had a seed plug transplanted thereinto may be selected on a case-by-case basis depending on the size of the plant variety to be grown on the plant support panel. Thus, covering each opening with a film comprising a plurality of cross-shaped slits may increase the chances of plants being grown on the plant support panel optimally/efficiently/uniformly.

The shape of the film may be adapted to the shape of an opening the film is intended to cover. Thus, the film may comprise straight edges or rounded edges. It will be appreciated that the film may comprise a mixture of straight edges and rounded edges, e.g. straight horizontal edges and rounded vertical edges. The film may comprise straight edges with rounded corners. Alternatively, the film may comprise straight edges with square, or substantially square, corners.

The film may be of any material. However, preferably the film is of a material that is relatively firm to ensure the film does not break when a seed plug is transplanted into a cross-shaped slit therein. More preferably, the film is made of or comprises a material selected from the group consisting of bioplastics, ethylene propylene diene monomer rubber (EPDM rubber), polylactic acid, and silicone. Even more preferably, the film is made of or comprises silicone.

The cross-shaped slits may be arranged in any configuration/orientation. Preferably, the cross-shaped slits are arranged in a vertical configuration or a diagonal configuration. In this context, a "vertical" configuration is intended to mean that the cross-shaped slits are arranged such that these each resemble a plus symbol, whilst a "diagonal" configuration is intended to mean that the cross-shaped slits are arranged such that these each resemble a multiplication symbol. More preferably, the cross-shaped slits are arranged in a diagonal configuration. A diagonal configuration is particularly suitable when the plant support panel is to be used together with one or more trapezoidal seed plug(s), and may be preferred over a vertical configuration in such circumstances because this configuration allows a greater number of seed plugs to be transplanted onto the plant support panel than using a vertical configuration, instead.

It will be appreciated that the film may comprise a mixture of diagonally arranged cross-shaped slits and vertically arranged cross-shaped slits.

A seed plug may be transplanted into a cross-shaped slit by pushing the seed plug into a centre of the cross-shaped slit, causing the slits to open, thereby forming triangular fingers that grip the seed plug and hold it in place. This gripping function of the triangular fingers may be enhanced by the film being made of a resilient material, such as silicone.

Preferably, the cross-shaped slits are arranged such that the cross-shaped slits are spaced evenly along the film. More preferably, the cross-shaped slits are arranged such that the cross-shaped slits are spaced evenly along the film and a centre of each cross-shaped slit is in line with the centres of every other cross-shaped slit in the film.

There may be any number of cross-shaped slits in the film. Preferably, there are between one and thirty cross-shaped slits in the film. More preferably, there are four or eight or thirteen cross-shaped slits in the film. In some Examples below, there are eight cross-shaped slits in the film. In another Example below, there are thirteen cross-shaped slits in the film.

As an alternative to cross-shaped slits, the film may comprise slits that are half-moon-shaped. Half-moon-shaped slits may be particularly suitable if the plant support panel is to be used together with one or more cylindrical seed plug(s). It will be appreciated that the film may comprise a mixture of cross-shaped slits and half-moon-shaped slits.

The film is conveniently watertight. This may ensure that nutrient medium does not leak out of the openings when spray nozzles within the plant support panel are active, projecting spray/mist therefrom, which would otherwise waste nutrient medium since this would not be taken up by the plants growing on the plant support panel. Having a watertight film covering each opening may help retain the nutrient medium in the opening, where it may be taken up by a plant growing therein, thereby reducing the amount of nutrient medium wasted and thus increasing the efficiency of the aeroponic plant cultivation system.

The film may be watertight when there is no seed plug positioned in any of the cross-shaped slits thereof. However, the film may also be substantially watertight, and preferably completely watertight, even when there is a seed plug positioned in one or more of the cross-shaped slits thereof. The film may be watertight even when there is a seed plug positioned in one or more of the cross-shaped slits thereof because triangular fingers formed when a seed plug is positioned in the cross-shaped slit may press tightly against the seed plug, creating a watertight seal.

It will be appreciated that the exact number of plants grown on the plant support panel will depend on the dimensions, i.e. size, of the plant support panel, as well as the size of the plants grown thereon and/or the number of openings of the plant support panel into which seed plugs are transplanted.

However, in an embodiment wherein there are fifteen rows of openings and each opening is covered by a film comprising a plurality of cross-shaped slits, the pane of the plant support panel may support up to 415 plants in total. Thus, if the plant support panel of this embodiment of the invention is adapted to comprise two identical panes, then this plant support panel may support up to 830 plants in total.

In another embodiment wherein there are fifteen rows of openings, wherein none of the openings are covered by a film comprising cross-shaped slits, and wherein seed plugs each seeded with a plurality of seeds are transplanted into the openings, the pane of the plant support panel may support up to 850 plants in total. Thus, if the plant support panel of this embodiment of the invention is adapted to comprise two identical panes, then this plant support panel may support up to 1700 plants in total.

In another embodiment wherein there are twenty-five rows of openings, wherein none of the openings are covered by a film comprising cross-shaped slits, and wherein seed plugs each seeded with a plurality of seeds are transplanted into the openings, the pane of the plant support panel may support up to 1350 plants in total. Thus, if the plant support panel of this embodiment of the invention is adapted to comprise two identical panes, then this plant support panel may support up to 2700 plants in total.

According to a second aspect of the invention, there is provided use of a plant support panel according to the first aspect of the invention in an aeroponic plant cultivation system.

### Examples

The invention is now illustrated by way of the following examples, with reference to the accompanying drawings, in which:
Fig. 1 shows a front view of a plant support panel according to an embodiment of the first aspect of the invention;
Fig. 2 shows a front view of a plant support panel according to a different embodiment of the first aspect of the invention to that shown in Figure 1;
Fig. 3 shows a partial side view, in cross-section, of a plant support panel according to an embodiment of the first aspect of the invention having recessed openings;
Fig. 4 shows a partial side view, in cross-section, of a plant support panel according to a different embodiment of the first aspect of the invention to that shown in Figure 3, also having recessed openings;
Fig. 5 shows a partial side view, in cross-section, of a plant support panel according to an embodiment of the first aspect of the invention not having recessed openings but wherein the bottom lip and the top lip of each opening are angled/folded towards each other to define a slit;
Fig. 6 shows a partial side view, in cross-section, of a plant support panel according to a different embodiment of the first aspect of the invention to that shown in Figure 5, also not having recessed openings but wherein the bottom lip and the top lip of each opening are angled/folded towards each other to define a slit;
Fig. 7 shows a front view of an opening of a plant support panel according to an embodiment of the first aspect of the invention, wherein the opening is covered by a film comprising cross-shaped slits arranged in a vertical configuration;
Fig. 8 shows a front view of an opening of a plant support panel according to an embodiment of the first aspect of the invention, wherein the opening is covered by a film comprising cross-shaped slits arranged in a diagonal configuration; and
Fig. 9 shows a front view of an opening of a plant support panel according to a different embodiment of the first aspect of the invention to that shown in Figure 8, also wherein the opening is covered by a film comprising cross-shaped slits arranged in a diagonal configuration.

### Example 1 - Plant support panel comprising openings in the form of slots

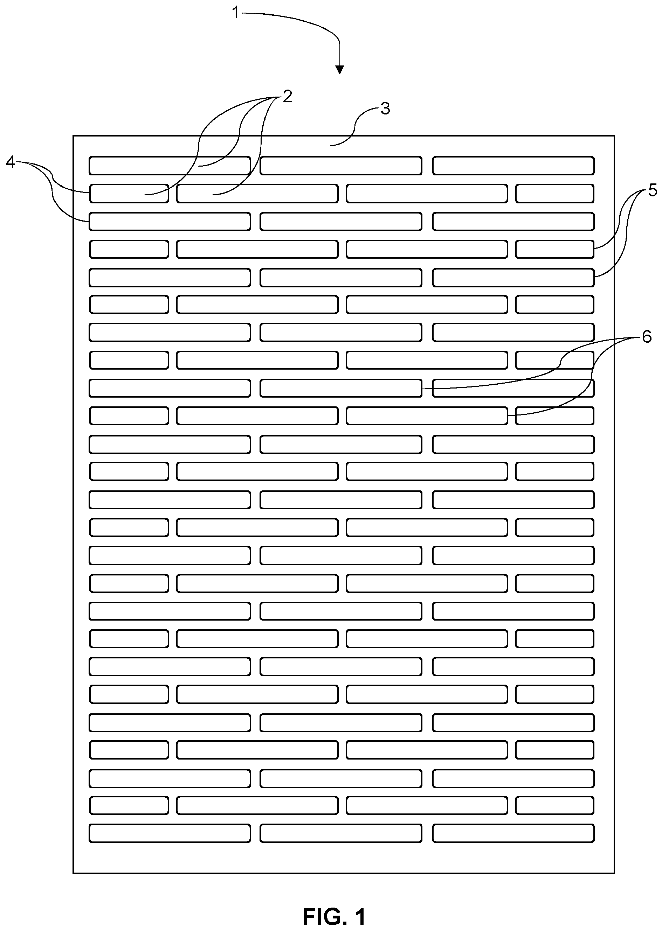

Referring to Figure 1, a plant support panel 1 comprises an array of openings 2 in a pane 3 thereof. The openings are in the form of slots arranged such that their long dimensions are along a width of the pane of the plant support panel. The array comprises twenty-five rows of openings, wherein the rows are alternated such that one row comprises three openings all of the same size, then the next row comprises four openings of two different sizes, and so on.

The openings are arranged such that the left edges of the left-most openings 4 of each row are vertically in line with each other. Similarly, the openings are arranged such that the right edges of the right-most openings 5 of each row are vertically in line with each other. However, the rows are offset such that the other edges 6 of the openings of each row are not vertically in line with the other edges 6 of the openings of the row(s) immediately adjacent to it.

The plant support panel is of high density polyethylene.

It will be appreciated that a film suitable for use with the plant support panel 1 may have straight edges with rounded corners.

### Example 2 - Plant support panel comprising openings in the form of slots

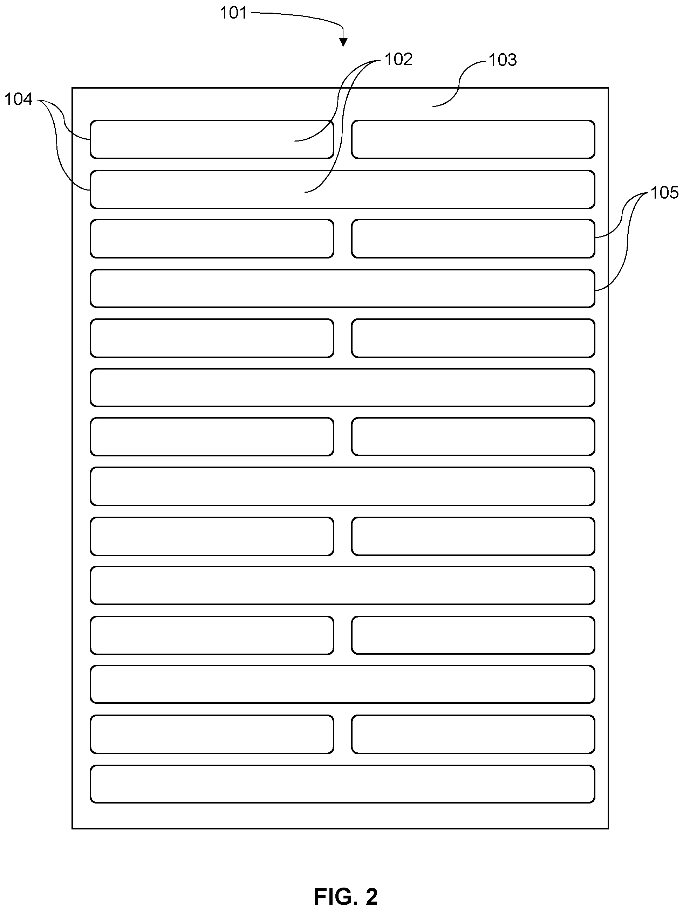

Referring to Figure 2, a plant support panel 101 comprises an array of openings 102 in a pane 103 thereof. The openings are in the form of slots arranged such that their long dimensions are along a width of the pane of the plant support panel. The array comprises fourteen rows of openings, wherein the rows are alternated such that one row comprises two openings both of the same size, then the next row comprises one opening, and so on.

The openings are arranged such that the left edges of the left-most openings 104 of each row are vertically in line with each other. Similarly, the openings are arranged such that the right edges of the right-most openings 105 of each row are vertically in line with each other.

The plant support panel is of linear low density polyethylene.

It will be appreciated that a film suitable for use with the plant support panel 101 may have straight edges with rounded corners.

### Example 3 - Structure of openings of a plant support panel

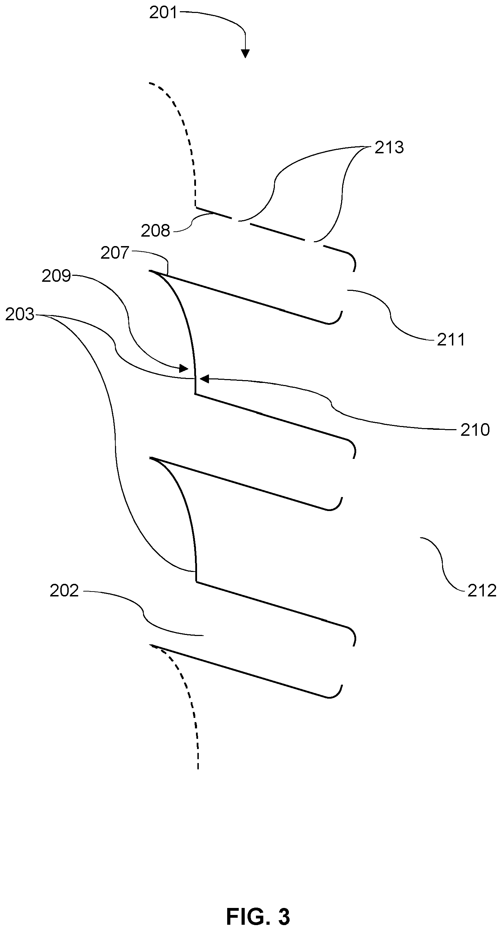

Referring to Figure 3, a pane 203 of a plant support panel 201 comprises a plurality of openings 202 (only three openings shown in Figure 3). In Figure 3, the dashed lines indicate that the pane continues above and below the openings shown therein but that the continued part of the pane is not shown in this drawing.

Each opening has a bottom lip 207 and a top lip 208. The bottom lip protrudes out from the front face 209 of the pane, but the top lip does not. The bottom lip and the top lip both protrude from the back face 210 of the pane to render the opening recessed and, within the recessed opening, the bottom lip and the top lip are folded towards each other to define a slit 211.

A seed plug (not shown in Figure 3) containing a seed may be positioned in one of the openings of the plant support panel. When a plant grows from the seed, a root of the plant may grow through the slit into a space 212 where a spray nozzle assembly (not shown in Figure 3) is positioned to provide nutrient medium in the form of a spray/mist to the root.

One of the openings has two holes 213 cut into a portion of the top lip thereof proximal to the fold of the top lip. Thus, spray/mist that collects on an upper surface of the top lip may pass through the top lip, via these holes, to a seed plug, and thus to a seed, supported by the opening, which means the seed is able to receive sufficient nutrients from the spray nozzle assembly even before a root has grown from that seed to a sufficient length to allow the root to grow through the slit to the space where the spray nozzle assembly is positioned.

### Example 4 - Structure of openings of a plant support panel

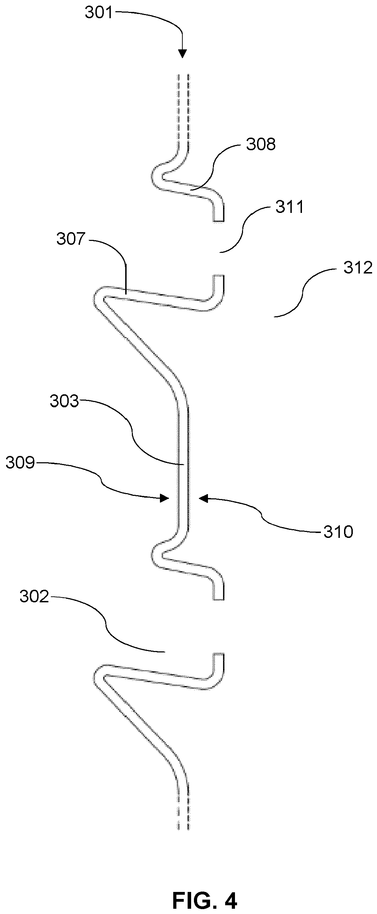

Referring to Figure 4, a pane 303 of a plant support panel 301 comprises a plurality of openings 302 (only two openings shown in Figure 4). In Figure 4, the dashed lines indicate that the pane continues above and below the openings shown therein but that the continued part of the pane is not shown in this drawing.

Each opening has a bottom lip 307 and a top lip 308. Both the bottom lip and the top lip protrude from the front face 309 of the pane, but the bottom lip protrudes out from the front face further than the top lip does. The bottom lip and the top lip both protrude from the back face 310 of the pane to render the opening recessed and, within the recessed opening, the bottom lip and the top lip are folded towards each other to define a slit 311.

A seed plug (not shown in Figure 4) containing a seed may be positioned in one of the openings of the plant support panel. When a plant grows from the seed, a root of the plant may grow through the slit into a space 312 where a spray nozzle assembly (not shown in Figure 4) is positioned to provide nutrient medium in the form of a spray/mist to the root.

Although each opening is recessed, the bottom lip 307 and the top lip 308 do not protrude from the back face 310 as far as the bottom lip 207 and the top lip 208 protrude from the back face 210 in the embodiment shown in Figure 3. Thus, in the embodiment shown in Figure 4, there is a reduced need to provide holes in the top lip 308 because the root can be expected to grow through the slit 311 earlier during plant development than the root could be expected to grow through the slit 211 of the embodiment shown in Figure 3. It will nonetheless be appreciated that holes could be provided in the top lip 308 of the plant support panel 301 shown in Figure 4 to ensure the seed is able to receive sufficient nutrients from the spray nozzle assembly even before a root has grown from that seed to a sufficient length to allow the root to grow through the slit to the space where the spray nozzle assembly is positioned.

### Example 5 - Structure of openings of a plant support panel

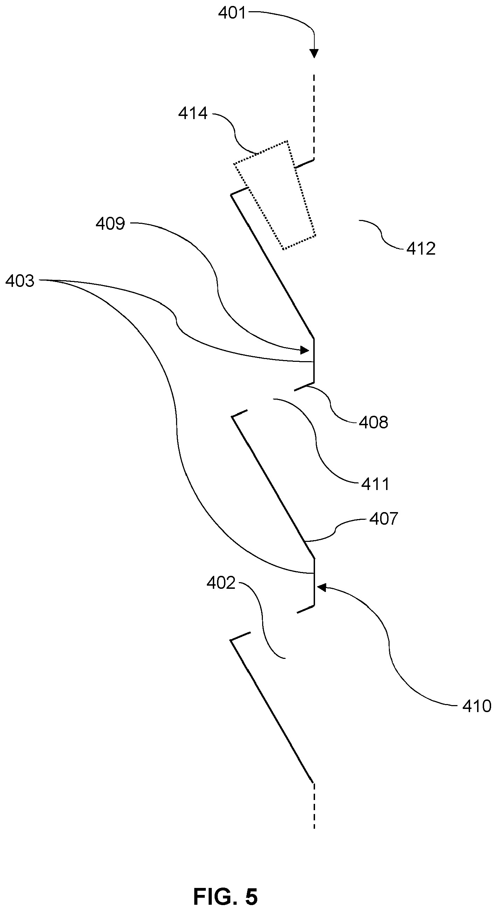

Referring to Figure 5, a pane 403 of a plant support panel 401 comprises a plurality of openings 402 (only three openings shown in Figure 5). In Figure 5, the dashed lines indicate that the pane continues above and below the openings shown therein but that the continued part of the pane is not shown in this drawing.

Each opening has a bottom lip 407 and a top lip 408. Both the bottom lip and the top lip protrude from the front face 409 of the pane, but the bottom lip protrudes out from the front face further than the top lip does. The bottom lip is angled towards the top of the pane, and is then folded towards the top lip. Similarly, the top lip is angled towards the bottom lip such that the bottom lip and the top lip are angled/folded towards each other to define a slit 411. None of the openings are recessed and neither the bottom lip nor the top lip protrudes from the back face 410 of the pane.

A seed plug 414 (indicated by the dotted lines in Figure 5) containing a seed is positioned in one of the openings of the plant support panel. The seed plug is trapezoidal in shape and is thus readily held in position by the slit due to its wider surface being too wide to pass through the slit. Thus, a portion of the seed plug is positioned in a space 412 where a spray nozzle assembly (not shown in Figure 5) is positioned to provide nutrient medium in the form of a spray/mist to a seed contained/held by the seed plug.

### Example 6 - Structure of openings of a plant support panel

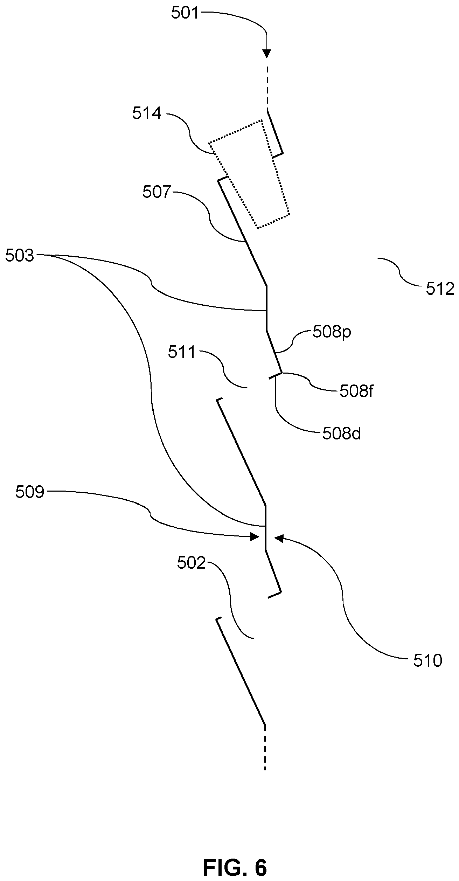

Referring to Figure 6, a pane 503 of a plant support panel 501 comprises a plurality of openings 502 (only three openings shown in Figure 6). In Figure 6, the dashed lines indicate that the pane continues above and below the openings shown therein but that the continued part of the pane is not shown in this drawing.

Each opening has a bottom lip 507 and a top lip 508d, 508f, 508p. The bottom lip protrudes from the front face 509 of the pane and is angled towards a top of the pane. The bottom lip is then folded towards the top lip. The top lip protrudes from the back face 510 of the pane and is angled towards a bottom of the pane. The top lip is then folded towards the bottom lip. A portion 508d of the top lip distal to the fold 508f is sufficiently short that the entire top lip, comprising both the portion 508d thereof distal to the fold and a portion 508p thereof proximal to the fold, protrudes from the back face of the pane but not the front face thereof, despite the top lip being folded towards the bottom lip.

The folding of the bottom lip and the top lip is such that the bottom lip and the top lip are folded towards each other to define a slit 511.

None of the openings are recessed.

A seed plug 514 (indicated by the dotted lines in Figure 6) containing a seed is positioned in one of the openings of the plant support panel. The seed plug is trapezoidal in shape and is thus readily held in position by the slit due to its wider surface being too wide to pass through the slit. Thus, a portion of the seed plug is positioned in a space 512 where a spray nozzle assembly (not shown in Figure 6) is positioned to provide nutrient medium in the form of a spray/mist to a seed contained/held by the seed plug.

### Example 7 - Film comprising cross-shaped slits arranged in a vertical configuration

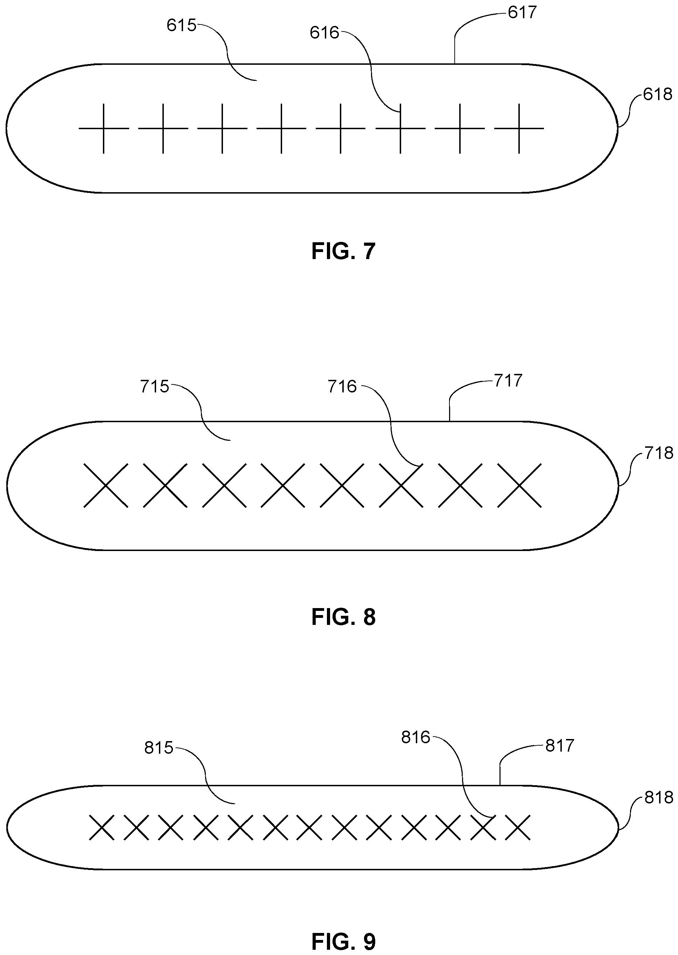

Referring to Figure 7, a film 615 for an opening of a plant support panel comprises eight cross-shaped slits 616 arranged in a vertical configuration. Each cross-shaped slit is adapted to hold/contain one seed plug (not shown in Figure 7) containing/holding one seed in a specific position within the opening. The film is of silicone.

The film has straight horizontal edges 617 and rounded vertical edges 618.

### Example 8 - Film comprising cross-shaped slits arranged in a diagonal configuration

Referring to Figure 8, a film 715 for an opening of a plant support panel comprises eight cross-shaped slits 716 arranged in a diagonal configuration. Each cross-shaped slit is adapted to hold/contain one seed plug (not shown in Figure 8) containing/holding one seed in a specific position within the opening. The film is of EPDM rubber.

The film has straight horizontal edges 717 and rounded vertical edges 718.

### Example 9 - Film comprising cross-shaped slits arranged in a diagonal configuration

Referring to Figure 9, a film 815 for an opening of a plant support panel comprises thirteen cross-shaped slits 816 arranged in a diagonal configuration. Each cross-shaped slit is adapted to hold/contain one seed plug (not shown in Figure 9) containing/holding one seed in a specific position within the opening. The film is of silicone.

The film has straight horizontal edges 817 and rounded vertical edges 818.

## Claims

1. A plant support panel for an aeroponic plant cultivation system, comprising:
(a) a pane, having:
(i) a front face,
(ii) a back face,
(iii) a top in use, and
(iv) a bottom in use, and
(b) a plurality of openings in the pane each for supporting at least one seed plug,
wherein:
each opening is for supporting a plurality of plants,
each opening is in the form of a slot arranged such that its long dimension is along a width of the pane, and
each opening has a bottom lip at a bottom of the slot.

2. A plant support panel as claimed in claim 1, wherein the openings are arranged in an array.

3. A plant support panel as claimed in claim 2, wherein the array is a plurality of rows.

4. A plant support panel as claimed in claim 3, wherein each row of openings is offset relative to the row(s) of openings adjacent to it.

5. A plant support panel as claimed in any one of claims 1-4, wherein the bottom lip of each opening either:
(i) protrudes from the front face and is angled towards the top of the pane, or
(ii) protrudes from the back face and is angled towards the bottom of the pane.

6. A plant support panel as claimed in any one of claims 1-5, wherein each opening has a top lip at a top of the slot.

7. A plant support panel as claimed in any one of claims 1-6, wherein a slit is defined at a front of each opening or a slit is defined at a back of each opening.

8. A plant support panel as claimed in claim 7, wherein the slit is defined by the bottom lip of each opening being angled/folded towards a top of the slot.

9. A plant support panel as claimed in claim 7, wherein the slit is defined by the top lip of each opening being angled/folded towards the bottom of the slot.

10. A plant support panel as claimed in claim 7, wherein the slit is defined by the bottom lip and the top lip of each opening being angled/folded towards each other.

11. A plant support panel as claimed in any one of claims 1-10, wherein each opening is covered by a film comprising a plurality of cross-shaped slits.

12. A plant support panel as claimed in claim 11, wherein the film is made of or comprises silicone.

13. A plant support panel as claimed in claim 11 or claim 12, wherein the cross-shaped slits are arranged in a vertical configuration or a diagonal configuration.

14. A plant support panel as claimed in any one of claims 11-13, wherein the film is watertight.

15. Use of a plant support panel as claimed in any one of claims 1-14 in an aeroponic plant cultivation system.
